# EUROPEAN PATENT APPLICATION

(11) **EP 2 587 757 A1**
(43) Date of publication of application: **01.05.2013**
(21) Application number: 11789196.0
(22) Date of filing: 31.05.2011
(51) Int. Cl.: H04L 29/06

(54) **METHOD, SYSTEM AND APPARATUS FOR SUPPORTING ADVERTISING CONTENTS IN HYPERTEXT TRANSFER PROTOCOL STREAMING PLAY MODE**

(30) Priority: 05.08.2010 CN 201010251913
(71) Applicant: Huawei Technologies Co., Ltd., Shenzhen, Guangdong 518129 (CN)
(72) Inventor: YUAN, Weizhong, Shenzhen Guangdong 518129 (CN); SHI, Teng, Shenzhen Guangdong 518129 (CN); LIU, Guangyuan, Shenzhen Guangdong 518129 (CN); ZHANG, Yuanyuan, Shenzhen Guangdong 518129 (CN); TIAN, Yonghui, Shenzhen Guangdong 518129 (CN); ZHANG, Renzhou, Shenzhen Guangdong 518129 (CN); WU, Lingyan, Shenzhen Guangdong 518129 (CN); YUE, Peiyu, Shenzhen Guangdong 518129 (CN); ZHANG, Chuxiong, Shenzhen Guangdong 518129 (CN)
(74) Representative: Maiwald Patentanwalts GmbH
(86) International application number: PCT/CN2011/074944
(87) International publication number: WO 2011/150817

(57) **Abstract**

The present invention provides a method, apparatus and system for supporting advertisement contents in an HTTP streaming play mode. The method comprises: receiving media presentation description information from a server, wherein advertisement content support information is included in the media presentation description information; acquiring and playing advertisement contents according to media presentation information; requesting for media contents from the server according to the advertisement content support information and playing conditions of the advertisement contents. By means of verification, the embodiments of the present invention enable the media contents transmitted by adopting the HTTP Streaming mode to support advertisement contents without only depending on the rule files performed by the client, enables the result of watching the advertisement effectively impact on the subsequent request, acquisition and play for the content slices and improve the difficulty and level for avoiding the advertisements.

## Description

### CROSS REFERENCE TO RELATED APPLICATIONS

The present application claims the priority of the Chinese patent application No. 201010251913.2 filed on August 5, 2010, entitled "METHOD, APPARATUS AND SYSTEM FOR SUPPORTING ADVERTISEMENT CONTENTS IN HTTP STREAMING PLAY MODE", the disclosure of which is incorporated herein by reference in its entirety.

### TECHNICAL FIELD

The present invention relates to the field of communication technology, and particularly to a method, apparatus and system for supporting advertisement contents in HTTP streaming play mode.

### BACKGROUND ART

There are many ways for a user to acquire and play multimedia contents using terminal device, typically including downloading to a local disk and playing via Hypertext Transfer Protocol (HTTP) file download or Peer to Peer (P2P) file download; traditional streaming media modes (RTP (Realtime Transport Protocol)/RTCP (Realtime Transport Control Protocol) for data transmission and RTSP (Real Time Streaming Protocol) for play control), online live video/video-on-demand in a mode of P2P streaming media, HTTP Progressive Download, etc.

However, the traditional streaming media is common to the P2P streaming media in that it is necessary to deploy dedicated streaming media server and clients; most of the underlying layer bearer protocols adopt User Datagram Protocol (UDP), the real-time performance of which for transmitting multimedia contents is better, but issues like Network Address Translation (NAT) and firewall traversal as well as unreliable transmission should be solved.

Although there is no need for the HTTP protocol mode to solve issues like NAT and firewall traversal, it requires downloading the requested media file to a local disk before playing. Yet, this is not appropriate for the multimedia content files currently with sizes ranging from hundreds of megabytes to even several gigabytes. Users, under the existing network conditions, have to wait a relative long time for completing the whole process of downloading.

On the basis of the HTTP file download mode, the HTTP Progressive Download enables a terminal device to play media while it is downloading without having to wait until the entire file is completely downloaded before it plays, which may lead to a less time for starting play. This is achieved by a principle that the media content can be divided into slices, and one (/one set) of content slices is able to be decoded independently at the terminal device regardless of other slices. As such, the terminal device can perform an operation of decoding and playing when only one (one set) of content slices is transmitted between a server and client, and also the next one (next set) of content slices can be received simultaneously. In this way, the granularity for processing the media file is adjusted from an entire file to a content slice thereof. Typically, the duration for playing a content slice is several seconds, e.g., 1∼10 seconds. However, users would not gain a similar experience from the HTTP Progressive Download as from a traditional streaming media mainly due to the following two points:

Longer delay in beginning to play: A longer delay in playing a media is caused by a fact that the progressive download should download one (/one set) of content slices for loading into the buffer of a player in addition to an intact file-level metadata downloaded to the terminal device ;

Lack of support for the operation of controlling on playing media: Progressive download enables operations such as Backward Seek on parts of contents which are locally downloaded already, and disables operations such as Fast Forward, Forward Seek on the parts that have not been downloaded. Yet, many users have gotten into a habit of fast forwarding or forward seeking the part that they are not interested in and backward forwarding to the part of interest for playing

Therefore, an enhanced HTTP protocol-based method capable of streaming transmission contents is developed on the basis and idea of the HTTP Progressive Download, which is called HTTP Streaming transmission scheme. The above scheme supports a dynamic code rate adaptation, that is, contents matching with the available bandwidth between the client and server can be chosen adaptively according to the size of the available bandwidth in real time during the process of playing, in order to provide the user with a play experience as high in a quality as possible. Thus, this scheme is also known as HTTP Adaptive Streaming (HAS) or Adaptive HTTP Streaming.

HTTP Streaming, as a method for delivering content over the Internet, should take into account a business mode for supporting advertisement, i.e., in virtue of advertising sponsorship, users who have watched advertisements will be able to view the content of media programs for free. This can be more easily and simply achieved under the environment of internet without considering issues related to registration/payment/security/privacy etc.

In the prior art, advertising breaks and play control in a video-on-demand (VoD) program are performed according to a rule file which defines whether advertisements are allowed to interrupt the program and whether respective periods during the breaks can be fast forwarded or fast reversed. This rule file is provided by a CP (Content Provider) cooperatively with an SP (Service Provider), and then is obtained while the program is downloading. Alternately, the rule file can be obtained in some other approaches. CPs transmit their own rules to VoD SPs through 204. The rules of CPs can be modified by the SPs with their own rules which will be delivered to the client equipment through 208. Besides, SPs can also establish rules irrelevant to the CPs, which will also be delivered to the client equipment through 206. These rules will be stored by the client device after being received, so as to be utilized during the playback of the programs. When the playback of the program is performed, rules relative to the media program is applied, then whether the rules would be abandoned will depend on specific criteria. It is necessary for the prior art to define extra rule files in addition to media files. Thus, the client will consider secure storage for the rule files, otherwise the rule files might suffer from intentional deletion and tampering. In addition, in the case that the rules of CP/SP distribution are performed utterly by the client, the advertisements would be bypassed if the rules were not performed by the client.

### SUMMARY OF THE INVENTION

The embodiments of the present invention are to provide a method, apparatus and system for supporting advertisement contents in an HTTP streaming play mode which can overcome the technical problems of the prior art that setting rule files is necessary and users can skip the advertisement contents easily.

An embodiment of the present invention provides a method for supporting advertisement contents in an HTTP streaming play mode, comprising: receiving media presentation description information from a server, wherein advertisement content support information is included in the media presentation description information; acquiring and playing advertisement contents according to media presentation information; requesting for media contents from the server according to the advertisement content support information and playing conditions of the advertisement contents.

Another embodiment of the present invention provides an apparatus for supporting advertisement contents in an HTTP streaming play mode, comprising: a receiving unit for receiving media presentation description information from a server, and receiving advertisement contents according to media presentation information, wherein advertisement content support information in included in the media presentation description information; a requesting unit for requesting media contents from the server according to the advertisement content support information and the playing conditions of the advertisement contents; a playing unit for playing the advertisement contents.

Another embodiment of the present invention provides a system for supporting advertisement contents in an HTTP streaming play mode, comprising: a server for sending media presentation description information and advertisement contents, the media contents is sent when a circumstance that a client plays the advertisement contents meets requirements; the client for receiving media presentation description information, the media presentation description information including advertisement content support information; acquiring and playing advertisement contents from the server according to media presentation information; requesting for media contents from the server according to the advertisement content support information and the playing conditions of the advertisement contents.

By means of verification, the embodiments of the present invention enable the media contents transmitted by adopting the HTTP Streaming mode to support advertisement contents without setting rule files, enables the result of watching the advertisement effectively impact on the subsequent request, acquisition and play for the media slices and improve the difficulty for avoiding the advertisements.

### BRIEF DESCRIPTION OF THE DRAWINGS

Drawings illustrated herein, which are used to further improve the understanding of the present invention, constitute a part of the present application rather than limiting the present invention. In the drawings:
FIG. 1 is a flowchart of the method for supporting advertisement contents in an HTTP streaming play mode in the first embodiment of the present invention;
FIG. 2 is a flowchart of the method for verifying the advertisement contents in the second embodiment of the present invention;
FIG. 3 is a flowchart of the method for verifying the advertisement contents in the third embodiment of the present invention;
FIG. 4 is a flowchart of the method for supporting advertisement contents in an HTTP streaming play mode in the fourth embodiment of the present invention;
FIG. 5 is a flowchart of the method for supporting advertisement contents in an HTTP streaming play mode in the fifth embodiment of the present invention;
FIG. 6-1 is a structural schematic diagram of the apparatus for supporting advertisement contents in an HTTP streaming play mode in the sixth embodiment of the present invention;
FIG. 6-2 is a structural schematic diagram of the apparatus for supporting advertisement contents in an HTTP streaming play mode in the seventh embodiment of the present invention;
FIG. 6-3 is a structural schematic diagram of the apparatus for supporting advertisement contents in an HTTP streaming play mode in the eighth embodiment of the present invention.

### DETAILED DESCRIPTION

In order to more clearly clarify the objects, technical solution and advantages of the present application, embodiments thereof will be further detailed in combination with the embodiments and the drawings. The illustrative embodiments of the present invention and the descriptions thereof are merely used for explaining the present invention, rather than to limit in any manner the invention.

### Embodiment 1

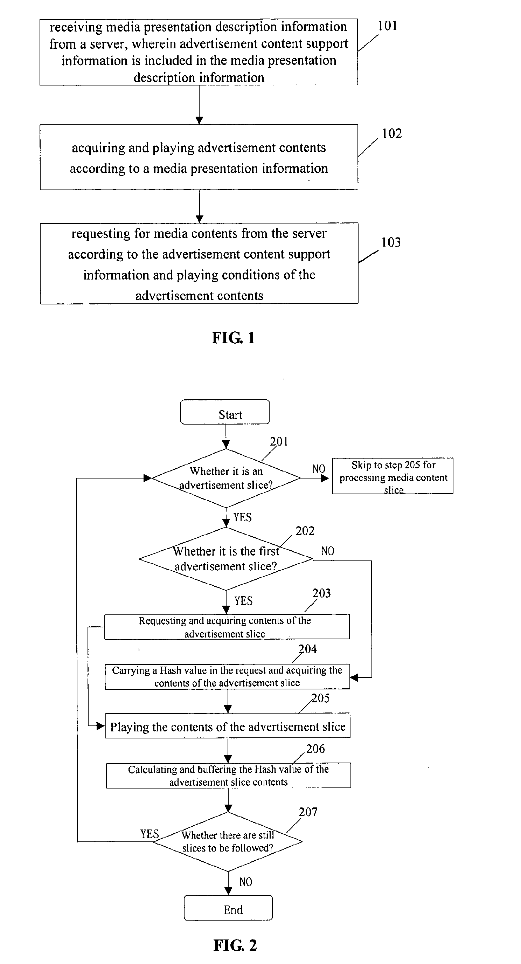

This embodiment provides a method for supporting advertisement contents in an HTTP streaming play mode. As shown in FIG. 1, the method comprises the following steps:

At step 101, media presentation description information is received from a server, the media presentation description information including advertisement content support information.

This step is executed by a client, and the Media Presentation Description (MPD) information is transmitted to the client by the server (or acquired by the client through other approaches such as an out-of-band mode), wherein the description and the support information for the advertisement contents are added, including the start time (or position) of the advertisement contents, the duration of the advertisement contents (or the URL for the slice of the start of the advertisement contents/the URL for the start of the media slice after the advertisement), or indicating whether it is advertisement contents corresponding to the newly added attributes for each media slice (if the media presentation description information is based on the XML format, the information related to the advertisement can be indicated by adding some relevant XML elements or attributes), and the mode/parameter and the like for verifying the advertisement contents (the mode/method for protecting the advertisement contents from being skipped).

Modes and parameters for verifying the advertisement contents include generating mode, carrying mode and associating mode of the verification information. Specifically, the generating mode of verification information includes a calculating mode of the characteristic values such as the arithmetic information and the object for calculating the Hash operation; or an extracting mode of characteristic values such as a specific field and the number of bytes. The carrying mode of verification information includes on which parameter the verification information will be carried, e.g., carrying the verification information on a specific parameter enables the server to learn that the verification information is carried on the corresponding position. The verification information may construct rules according to the URL provided in the MPD to replace the parameter in a specified position, or follows some specified parameter to serve as its value (value in the pair of name/value). The message on which the verification information should be carried is, for example, a message requesting the next advertisement slice, a message of a media slice after requesting the advertisement, a key message for requesting to decrypt the media contents, a message requesting metadata of the media contents, etc., or a URL destination address where the request message is to be sent. The way for associating is the way for associating the advertisement with the verification message required for verifying the media slice after each advertisement when there are a plurality of consecutive advertisement segments, e.g., associating with the adjacent advertisement immediately preceding it only or with all of the preceding advertisements, etc.

Another implementation discloses a way for generating the verification information is not included in the modes and parameters for verifying the advertisement contents. Yet, such a way requires the system or client to have a default (or pre-negotiated) way for generating the verification information, and adopts a default (or pre-negotiated) way for generating the verification information assumed by corresponding system or client.

The client may regard the advertisement descriptions and the support information as the advertisement strategies or rules formulated by the server, and should process according to corresponding rules. Since the server controls the media program contents (and the media description information, or even possibly the key for encrypting the media contents), the verification processing can be performed when the program contents are being provided simultaneously. In this way, a terminal will be enforced to execute strategies or rules for relevant advertisement.

At step 102, advertisement contents are acquired and played according to media presentation information.

This step is executed by the client, which sends the server a request for obtaining advertisement contents. When requesting for the advertisement contents, the client performs corresponding calculation or extraction according to the information required for verifying the advertisement contents in the media presentation description information (e.g., the Hash value calculated for the advertisement contents, some certain characteristic values of the advertisement contents such as the content ID/other specified fields), and carries the required information on the request sent to the server so as to be verified thereby

The client can prompt the user not to skip the part of advertisement while playing programs. There are many forms for the client to prompt the user not to skip the part of advertisement, e.g., prompting the user not to skip by marking the corresponding part on the seek bar in different highlighted colors according to the information during the advertisement period; showing the user in the forms of captions, images, links, user manual, system help and the like that the subsequent media contents will not be able to watch if the advertisement is chosen to be skipped. The most direct method is to explicitly prompt the user not to use some certain operations like fast forward or drag in the Trick Mode when watching the part of the advertisement contents. Furthermore, the client can also prompt the user that the advertisement contents can be re-watched and in turn enjoy the subsequent media contents by dragging the seek bar to the start of the corresponding part of the advertisement (i.e., the operation of Backward Seek or rollback) once the subsequent media contents is not available to be viewed due to skipping the advertisement accidentally or using the playing control operations of Trick Mode which should not be used.

At step 103, media contents are requested from the server according to the advertisement content support information and the playing conditions of the advertisement contents.

This step is executed by the client. The media verification information is generated according to the advertisement content support information and the execution condition of playing the advertisement contents, e.g., the Hash value is calculated according to the advertisement contents, or the content ID/other specified fields in the advertisement media slice is extracted; the media verification message is carried in a media request message sent to the server, and under the requirements of the method/parameter for verifying the advertisement contents in the media presentation description information, the client contains the above parameters of the verification information in the request message, which may consider the parameters of the verification information as a constituent part of the URL, or using an HTTP Header to carry the parameters of the verification information, thereby constructing the media slice request message. If the verification is successful, acquired media contents from the server , the media contents includes a plurality of media slices.

By means of verification, the embodiments of the present invention enable the media contents, which transmitted in the HTTP Streaming mode, to support advertisement contents without setting rule files. And enable the result of watching the advertisement effectively impact on the subsequent request, acquisition and play for the media slices. And improve the difficulty for avoiding the advertisements.

### Embodiment 2

This embodiment provides a method for acquiring the verification information of the advertisement contents. As shown in FIG. 2, in this method, calculating the Hash value of the contents of advertisement slice. And obtaining each advertisement slice all need to perform verification according to the Hash value of contents of the previous advertisement slice. Specifically, the method comprises the following steps:

At step 201, the client determines whether the content slice currently requested is the advertisement content slice according to the advertisement support information in the media presentation description information. This determination is performed by determining whether the period of the content slice falls within the time period of the advertisement part, or whether the content slice has the attributes of the advertisement slice, etc. If it is not the advertisement content slice, the processing flow directing at the media slice will be carried out; otherwise the following processing flow will be carried out.

At step 202, the process determines whether the slice being processed currently is the first advertisement slice. If the slice being processed currently is the first advertisement slice, it proceeds to step 203 of the subsequent processing flow; if the slice being processed currently is not the first advertisement slice, it turns to step 204.

At step 203, the client sends a request for a slice to the server and acquires advertisement contents of the slice.

At step 204, the client causes the Hash value calculated and buffered for the contents of the former advertisement slice. And the Hash value to be carried in the advertisement slice request which will be sent to the server, in order to obtain the contents of the advertisement slice.

At step 205, the client plays the contents of the advertisement slice.

At step 206, the client calculates and buffers the Hash value of the contents of the advertisement slice. The Hash value for requesting a subsequent slice adjacent to the advertisement slice (the sequence of step 205 and step 206 can be decided according to actual conditions, not limiting to the sequence of this embodiment);

At step 207, the process determines whether there are still subsequent slices to be requested and processed. If there are still subsequent slices to be requested and processed, the flow returns to step 201 to continue the processing; if not, the process ends.

In this embodiment, not limiting to the Hash value obtained by calculating and buffering the contents of the former slice, also a characteristic values can be extracted from the contents of the former slice. Moreover, a Hash value obtained by calculating the contents of the last one of the advertisement slices or the characteristic values extracted there from will be taken as the verification information required for verifying a subsequent request for the media program content slice after this advertisement.

This embodiment improves the difficulty for avoiding the advertisements by means of verifying the advertisement contents.

### Embodiment 3

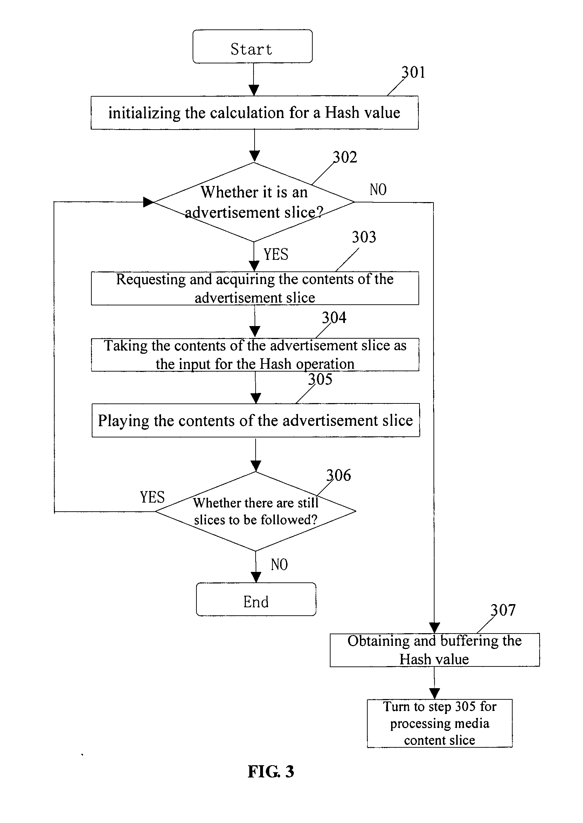

This embodiment provides a method for verifying advertisement contents. The method does not perform the verification for each advertisement content slice when requesting the advertisement content slice. In contrast, contents of all the advertisement slices are served as the input data of the Hash operation sequentially to obtain a Hash value covering the whole segment of advertisement contents through calculation, and this Hash value will be taken as the verification information required for the subsequent request for media program content slice after this advertisement by the client. As shown in FIG. 3, the method comprises the following steps:

At step 301, the client determines the Hash algorithm to be adopted and carries out corresponding process for initialization according to the modes/parameters and the like for verifying the advertisement contents of the advertisement support information in the media presentation description information.

At step 302, according to the advertisement support information in the media presentation description information, the client determines whether the content slice being requested currently is the advertisement content slice. This determination is performed by determining whether the time period of the content slice falls within the time period of the advertisement part, or whether the content slice has the attributes belong to the advertisement slice. If it is not the advertisement content slice, the process skips to step 307 in order to end the process; otherwise continues following processing flow.

At step 303, the client sends a request to the server and acquires the contents of the advertisement slice.

At step 304, the client takes the contents of the advertisement slice as the input data of the Hash operation to perform Hash updating operation.

At step 305, the client plays the contents of the advertisement slice (the sequence for the processes of step 305 and step 304 can be decided according to actual conditions, not limiting to the sequence in this embodiment);

At step 306, the process determines whether there are still slices to be followed to be requested and processed subsequently. If there are still slices to be followed to be requested and processed subsequently, the process returns to step 301 to continue the processing; if not, the process ends.

Step 307: the process ends the Hash operation, obtains and buffers the Hash value.

In this embodiment, it is not limited to take the Hash value, which is obtained and buffered by calculating the contents of the former slice, as the verification information required for subsequently requesting for verifying the media program content slice following the advertisement, but it can also be the characteristic values extracted from the contents of the former slice. Besides, the calculated Hash values of the contents of all the slices or all the extracted characteristic values can be combined (or performing Hash operation on the extracted characteristic values to obtain the Hash values) to serve as the verification information required for subsequently requesting for verifying the media program content slice following the advertisement.

This embodiment improves the difficulty for avoiding the advertisements by means of verifying the advertisement contents.

### Embodiment 4

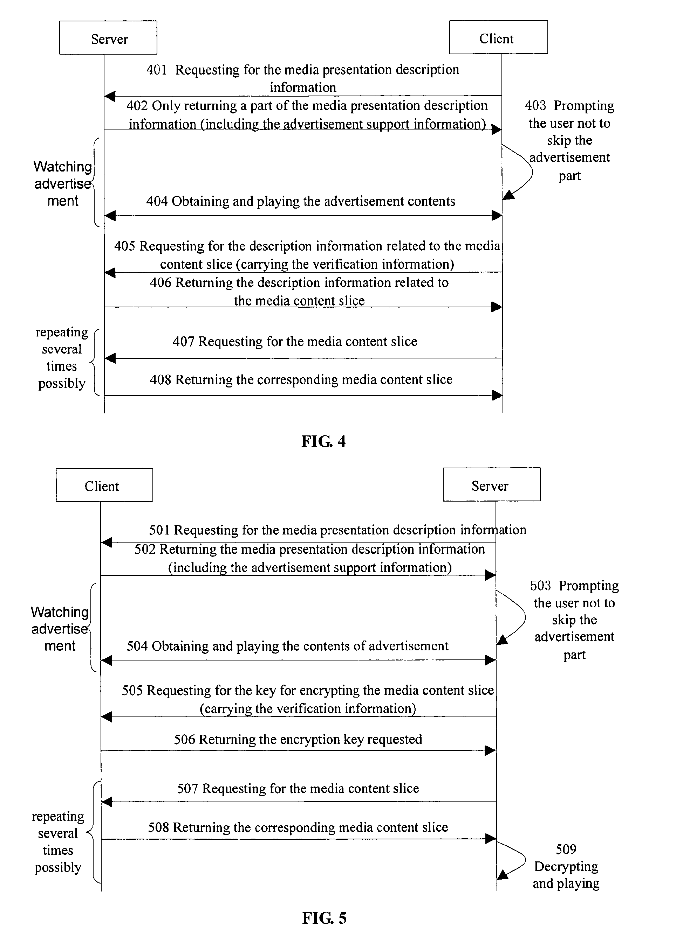

This embodiment provides another method for supporting advertisement contents in an HTTP streaming play mode. This method merely gives a part of the description information in the Media Presentation Description information in the beginning without including the description information on the media content slice (such as the duration of each slice, the URL for acquiring the slice or the rules for constructing the URL or templates for constructing the URL) therein. Only after receiving and watching the advertisement contents and the verification is successful, can client acquire the second batch of detailed description information about the media content slice from the server, and in turn construct the request message based on the description information to acquire and play the media content slice. As shown in FIG. 4, the method comprises the following steps:

At step 401, the client requests for the Media Presentation Description information according to the URL for playing of the media;

At step 402, the server merely returns a part of the Media Presentation Description information including advertisement support information/the modes/parameters of verifying the advertisement contents, the URL link address for acquiring description information related to the media content slice, etc., except the detailed description information related to the media content slice such as the duration of each slice, or the rules/templates for acquiring or constructing the URL, etc.;

At step 403, the client prompts the user not to skip the advertisement.

At step 404, the client plays the advertisement contents obtained from the server after the request.

At step 405, the client sends the verification information obtained in the above step 404, as the parameter carried on the request message for the description information related to the media content slice, according to the requirements in the Media Presentation Description information.

At step 406, after receiving the request for the description information, the server verifies the verification information carried on the request message firstly. If the verification is successful, the detailed description information of the corresponding media content slice will be returned; otherwise, the server will not return the description information.

At step 407, the client constructs a corresponding media content slice request according to the description information related to the media content slice that is acquired in the above step 406, and sends it to the server;

At step 408, the server returns the corresponding media content slice after receiving the request.

The sequence of the above steps 403-406, 407-408 is decided in view of the specific arrangement of the program contents and the advertisement parts, and can be repeated several times according to actual requirements.

This embodiment is not limited to merely insert a segment of advertisement contents in one media program content, but requires that for the media contents having advertisement contents before them, the relevant media description information can be obtained only after acquiring the verification information of the advertisement contents before them and corresponding verification is successful, and then the client construct the corresponding slice request message.

This embodiment improves the difficulty for avoiding the advertisements by means of verifying the advertisement contents or acquiring the detailed description information of the media contents.

### Embodiment 5

This embodiment provides a method for supporting advertisement contents in an HTTP streaming play mode, which is directed to a case that the content slice is not encrypted for protection. In this case, the content slice transmitted by the HTTP Streaming mode can be easily intercepted directly through adopting the network monitoring or HTTP monitoring software, tools and the like on a local area network. As shown in FIG. 5, the method comprises the following steps:

At step 501, client requests for the MPD according to the media playing URL of the media.

At step 502, the server returns the MPD which includes advertisement support information/the modes/parameters of verifying the advertisement contents, the detailed description information related to the media content slice such as the duration of each slice, the rules or templates for acquiring or creating the URL, the URL for acquiring the key used for encrypting the media contents, etc.

At step 503, the client prompts the user not to skip the advertisement.

At step 504, the client obtains and plays the advertisement contents from the server after request.

At step 505, the client sends the verification information obtained in the above step 504, as the parameter carried on the request message for the description information related to the media content slice.

At step 506, after the server receiving the request for the description information, the server verifies the verification information carried on the request message. If the verification is successful, the detailed description information of the corresponding media content slice will be returned; otherwise, the server will not return the description information. Steps 505 and 506 are capable of raising the security level, and adopting safe transmission mode such as HTTPS/TLS, which can be supported by the HTTP.

At step 507, the client constructs a request for a corresponding media content slice according to the MPD, and sends it to the server.

At step 508, the server returns the corresponding media content slice.

At step 509, the client uses the key obtained in the above step 506 to decrypt and play the media content slice obtained in the step 508.

The sequence of the steps 503-506, 507-509 is decided by the specific arrangement of the contents of the program and the advertisement part, and can be repeated several times according to actual requirements. This embodiment is not limited to only insert a segment of advertisement contents in one media program content, but requires that for the media contents having advertisement contents before them. The key information for decrypting the contents of a content slice can be obtained only after acquiring the verification information of the advertisement contents before them and corresponding verification is successful, and then the client decrypt and obtain media contents in the form of plaintext and play them.

This embodiment can be combined with other embodiments, and the two schemes of encryption and acquisition of the MPD in different batches can be combined, e.g., encrypting the media content slice based on the Embodiment 4; the client requests and acquires detailed description information of the media content slice as well as the key for encrypting the slice contents, after watching the advertisement contents and acquiring the verification information.

Another embodiment is that in addition to the acquisition of the key for encrypting the media content slice from the server, the client can also take the characteristic values calculated or extracted from the advertisement slice contents as the input data, and obtain the key for encrypting the media content slice through calculation by itself, such that the client do not need the process of making a request for the server and obtaining the key.

By encrypting of the media content slice, this embodiment is able to effectively increases the difficulty in evading the advertisement, and meanwhile improves the security of the HTTP Streaming transmission scheme.

### Embodiment 6

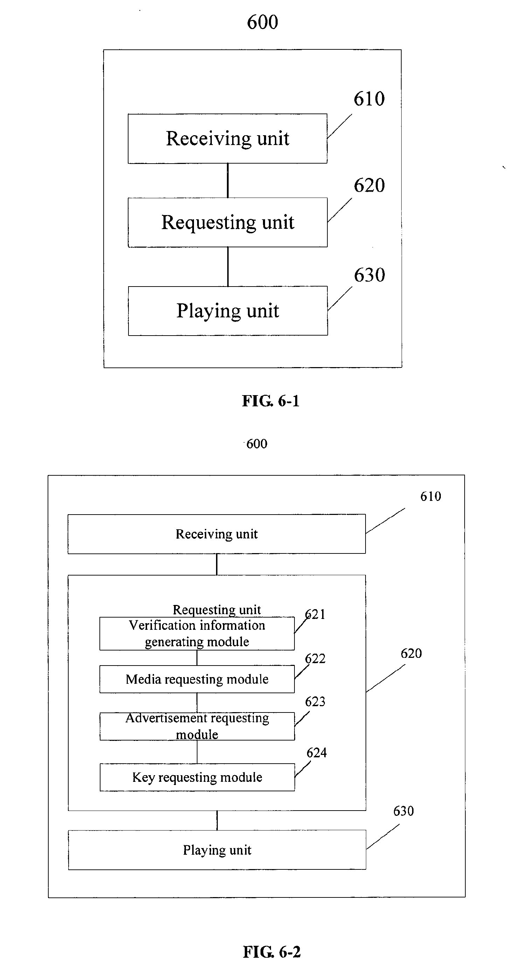

This embodiment provides an apparatus for supporting advertisement contents in an HTTP streaming play mode. As shown in FIG. 6-1, the apparatus 600 comprises:
a receiving unit 610 for receiving media presentation description information from a server and receiving advertisement contents according to media presentation information with advertisement content support information included therein; the advertisement content support information comprises the start time (or position) of the advertisement contents, the duration of the advertisement content slice and the generating mode and the verifying mode of the verification information;
a requesting unit 620 for requesting media contents from the server according to the advertisement content support information and the playing conditions of the advertisement contents;
a playing unit 630 for playing the advertisement contents.

By means of verification, this embodiment of the present invention enables the media contents transmitted in the HTTP Streaming mode to support advertisement contents without setting rule files, enable the result of watching the advertisement effectively impact on the subsequent request, acquisition and play for the content slices and improve the difficulty and level for avoiding the advertisements.

### Embodiment 7

This embodiment provides an apparatus for supporting advertisement contents in an HTTP streaming play mode. As shown in FIG. 6-2, the requesting unit 620 in the apparatus 600 comprises:
a verification information generating module 621 for generating media verification information according to the advertisement content support information and the executing playing conditions of the advertisement contents;
a media requesting module 622 for sending a media request message to a server, the media request message carrying the media verification information therein;
the receiving unit 610 acquires the media contents after the verification succeeds.

In one preferred embodiment, the requesting unit 620 further comprises:
an advertisement requesting module 623 for sending an advertisement request message for requesting for the next advertisement content slice to a server, the advertisement request message carrying advertisement verification information therein.

In this embodiment, the advertisement contents include a plurality of slices. The verification information generating module 621 calculates the Hash value according to the previous advertisement content slice as the advertisement verification information of the next advertisement content slice, and the Hash value calculated according to the last one of the advertisement content slices serves as media verification information. The receiving unit 610 acquires the first advertisement content slice directly and acquires the subsequent advertisement content slice after the verification is successful.

In another preferred embodiment, the Hash value of the whole advertisement contents calculated by the verification information generating module 621 inputting each advertisement content slice serves as the media verification information.

In another preferred embodiment, the verification information generating module 621 extracts the characteristic value of the advertisement content slice as the advertisement verification information of the next advertisement content slice, and the characteristic value extracted from the last one of the advertisement content slices serves as the media verification information.

In yet another preferred embodiment, the verification information generating module 621 extracts the characteristic value of each advertisement content slice and the characteristic values are connected to serve as the media verification information, or the Hash value obtained by calculating all the characteristic values as the input of the Hash operation sequentially serves as the media verification information.

In still another preferred embodiment, the requesting unit 620 can further comprise a media information requesting module for requesting detailed description information of the media contents from the server and carrying the media verification information on the request message. After a successful verification, the detailed description information of the media contents is acquired, and the media requesting unit constructs the media request message according to the detailed description information acquired.

By means of verification, this embodiment of the present invention enable the media contents transmitted by adopting the HTTP Streaming mode to be acquired only after the verification is successful, which can achieve the expected play effect.

### Embodiment 8

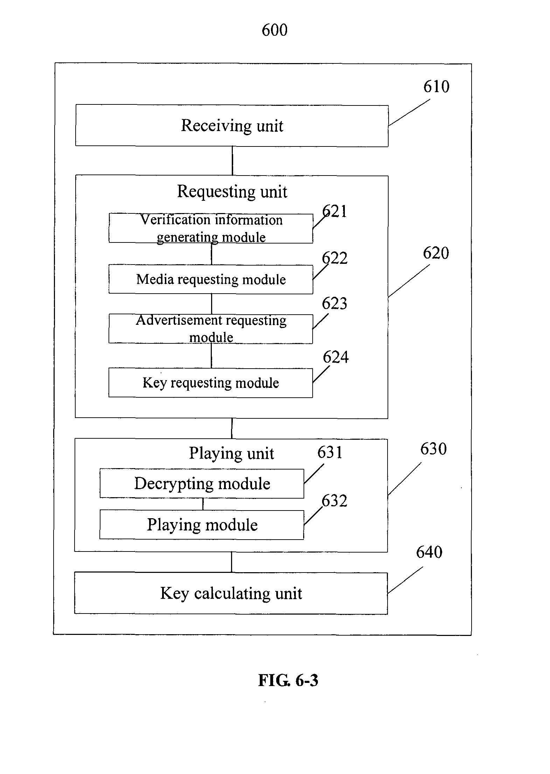

This embodiment provides an apparatus for supporting advertisement contents in an HTTP streaming play mode. As shown in FIG. 6-3, the media contents involved in the apparatus 600 are encrypted media contents, the advertisement content support information further comprises a key request mode, wherein the requesting unit 620 further comprises:
a verification information generating module 621 for generating media verification information according to the advertisement content support information and the executing playing conditions of the advertisement contents;
a key requesting module 624 for constructing a key request message and sending it to a server, the key request message carrying the media verification message therein;
a media requesting module 622 for sending a media request message to the server.

After the verification for the key request is successful, the receiving unit 610 acquires the encryption key of the media contents, and acquires the media contents after the verification for the media request message is successful.

Accordingly, the playing unit 630 comprises:
a decryption module 631 for decrypting the media contents using the key;
a playing module 632 for playing the decrypted media contents.

In another preferred embodiment, the playing unit 630 further comprises:
a key calculating unit 640 for calculating the key for encrypting the media contents according to the way for generating a key, e.g., key for encrypting the media contents can be calculated according to the characteristic value of the advertisement content slice and the way for generating the key, or according to the Hash value calculated according to the advertisement content slice and the key generation mode.

The media contents are decrypted using the key and played after being acquired.

In this embodiment of the present invention, verification is carried out through encryption, causing the verification mode to be more secure and improving the security of HTTP Streaming.

### Embodiment 9

This embodiment provides a system for supporting advertisement contents in an HTTP streaming play mode. The system comprises:
a server for transmitting the MPD and advertisement contents, and transmitting media contents when the executing playing conditions of the advertisement contents by a client meet the requirements; the advertisement content support information including the position of the advertisement contents, the duration of the advertisement content slice and the generation mode of the verification information;
a client for receiving the MPD and receiving advertisement contents according to media presentation information with advertisement content support information included therein; acquiring and playing the advertisement contents from the server; requesting media contents from the server according to the advertisement content support information and the playing conditions of the advertisement contents.

The client generates verification information according to the advertisement content support information and the playing conditions of the advertisement contents, and the verification information is carried in a media request message;
the server carries out verification according to the verification information, and sends the media contents after the verification is successful.

The detailed steps are as follows:
the server receives a content slice request message sent from the client and carries out analysis processing;
the server firstly performs analysis processing on advertisement verification information carried in the request message, and the verification mode is required to be consistent with the mode/parameter for verifying the advertisement contents in the advertisement support information in the MPD provided for the client in step 2 of FIG. 4. The server may calculate or store a corresponding verification value in advance for being compared with the verification information sent from the client during the verification processing, or perform Hash operation or extract the characteristic value on the instant of receiving the request of the client, and may store the verification value acquired temporarily;
the server determines whether the advertisement verification information carried in the request can be verified successfully, if the verification is successful, the server returns a corresponding media content slice to the client; if not, the server does not return the requested content slice to the client but returning a response of error; a response message may include corresponding erroneous information for the client to use while prompting a user.

The server realizes the binding of a verification parameter and a URL, and the file name of the content slice contains a corresponding verification parameter, i.e., a simple direct mapping is established between the URL and the file name storing the content slice, so that the HTTP server is able to find the corresponding content slice directly according to the URL. The server is necessary to provide a template and construction rules for URL in the description information, and the client can construct a URL requesting the content slice based on the information, e.g., it may be URL = basic URL + verification parameter (notes: the verification parameter may be coded in hexadecimal, under which circumstance it needs to perform Base64 coding on the verification parameter).

Dynamic verification processing is performed on the parameter in the URL or the URL is dynamically mapped to the file of the content slice, the verification information is taken as a parameter, and the server performs verification or mapping processing after receiving the corresponding parameter.

Through sending information from the client to the server and verifying it, the embodiments of the present invention enable the media contents transmitted by adopting the HTTP Streaming mode to support advertisement contents without setting rule files, enable the result of watching the advertisement effectively impact on the subsequent request, acquisition and play for the content slices and improve the difficulty and level for avoiding the advertisements.

The specific embodiments mentioned above give further detailed descriptions of the objective, the technical solution and the beneficial effect of the present invention. It should be understood that what described above are merely the embodiments of the present invention but not used to the projection scope of the present invention; any amendment, equivalent replacement, improvement and the like fell within the spirit and principle of the invention should be contained in the projection scope of the present invention.

## Claims

1. A method for supporting advertisement contents in an HTTP streaming play mode, **characterized in that** the method comprising:
receiving media presentation description information from a server, wherein advertisement content support information is included in the media presentation description information;
acquiring and playing advertisement contents according to media presentation information;
requesting for media contents from the server according to the advertisement content support information and playing conditions of the advertisement contents.

2. The method according to claim 1, **characterized in**:
the advertisement content support information includes a generating mode of verification information, the verification information includes advertisement verification information and media verification information.

3. The method according to claim 2, **characterized in that**, the step of acquiring and playing advertisement contents comprising:
acquiring and playing a first advertisement content slice;
acquiring verification information serving as advertisement verification information according to a previous advertisement content slice;
sending to a server an advertisement request message requesting for the next advertisement content slice, the advertisement request message carrying the advertisement verification information therein; and
acquiring and playing the next advertisement content slice if the verification is successful.

4. The method according to claim 3, **characterized in that**, the requesting for media contents from the server according to the advertisement content support information and playing conditions of the advertisement contents comprising:
generating media verification information according to the advertisement content support information and the playing conditions of the advertisement contents;
carrying the media verification information in a media request message to be sent to the server;
acquiring media contents if the verification is successful.

5. The method according to claim 4, **characterized in that**, the media verification information is the advertisement verification information of the last one of advertisement content slices.

6. The method according to claim 5, **characterized in**:
the advertisement verification information is a Hash value calculated according to an advertisement content slice, or is a specified characteristic value extracted from an advertisement content slice according to the advertisement content support information.

7. The method according to claim 4, **characterized in that**, the media verification information is acquired according to all of the advertisement content slices.

8. The method according to claim 7, **characterized in**:
the media verification information is a Hash value calculated by taking each advertisement content slice as input of Hash operation sequentially, or is a value obtained by extracting and connecting specified characteristic values extracted from respective advertisement content slices sequentially according to the advertisement content support information, or is a Hash value calculated by extracting specified characteristic values from respective advertisement content slices sequentially according to the advertisement content support information and taking them as the input of the Hash operation.

9. The method according to in claim 1, **characterized in**:
the media contents are encrypted media contents;
the advertisement content support information includes a key requesting mode, for requesting for an encryption key of the media contents from the server, or includes a generating mode of a key in order to generate an encryption key of the media contents.

10. An apparatus for supporting advertisement contents in an HTTP streaming play mode, **characterized in that** the apparatus comprising:
a receiving unit for receiving media presentation description information from a server and receiving advertisement contents according to media presentation information, wherein advertisement content support information in included in the media presentation description information;
a requesting unit for requesting media contents from the server according to the advertisement content support information and the playing conditions of the advertisement contents;
a playing unit for playing the advertisement contents.

11. The apparatus according to claim 10, **characterized in that** the requesting unit comprising:
a verification information generating module for generating media verification information according to the advertisement content support information and the playing conditions of the advertisement contents, the advertisement content support information including a generating mode of the verification information;
a media requesting module for sending a media request message to the server, the media request message carrying the media verification information therein.

12. The apparatus according to claim 11, **characterized in that** the requesting unit further comprising:
an advertisement requesting module for sending to the server an advertisement request message for requesting for a next advertisement content slice, the advertisement request message carrying advertisement verification information therein;
the advertisement verification information is a Hash value calculated by the verification information generating module according to a previous advertisement content slice;
the media verification information is a Hash value calculated by the verification information generating module according to the last one of the advertisement content slices.

13. The apparatus according to claim 11, **characterized in that**, the media verification information is a Hash value for the entire advertisement contents which is calculated through inputting each advertisement content slice by the verification information generating module.

14. The apparatus according to claim 11, **characterized in**, the requesting unit further comprising:
an advertisement slice requesting module for sending to the server an advertisement request message for requesting for a next advertisement content slice, the advertisement request message carrying advertisement verification information therein;
the advertisement verification information is a specified characteristic value extracted from a previous advertisement content slice by the verification information generating module;
the media verification information is a Hash value calculated by the verification information from the last one of the advertisement content slices.

15. The apparatus according to claim 11, **characterized in**:
the media verification information is obtained by connecting the characteristic values extracted from respective advertisement content slices by the verification information generating module.

16. The apparatus according to any of claims 10-15, **characterized in that**, the requesting unit further comprising:
a key requesting module for requesting for an encryption key of the media contents from the server according to the key requesting mode; the key requesting mode is included in advertisement content support information.

17. The apparatus according to any of claims 10-15, **characterized in that**, the apparatus further comprising:
a key calculating unit for generating an encryption key of the media contents according to a key generating mode;
the key generating mode included in advertisement content support information.

18. A system for supporting advertisement contents in an HTTP streaming play mode, **characterized in that**, the system comprising:
a server for sending media presentation description information and advertisement contents, the media contents is sent when a circumstance that a client plays the advertisement contents meets requirements;
the client for receiving media presentation description information; the media presentation description information including advertisement content support information; acquiring and playing the advertisement contents from the server according to media presentation information; requesting for media contents from the server according to the advertisement content support information and the playing conditions of the advertisement contents.
